(19) Europäisches Patentamt
European Patent Office
Office européen des brevets

(11) **EP 1 119 757 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **99950683.5**

(22) Anmeldetag: **08.10.1999**

(51) Int Cl.⁷: **G01M 17/007**

(86) Internationale Anmeldenummer:
**PCT/EP99/07576**

(87) Internationale Veröffentlichungsnummer:
**WO 00/022405 (20.04.2000 Gazette 2000/16)**

(54) **VERFAHREN UND VORRICHTUNG ZUR MASSENSIMULATION VON KRAFTFAHRZEUGEN AUF ORTSFESTEN PRÜFSTÄNDEN**

METHOD AND DEVICE FOR SIMULATING THE MASS OF MOTOR VEHICLES PLACED ON STATIONARY TEST STANDS

PROCEDE ET DISPOSITIF POUR SIMULER LA MASSE DE VEHICULES AUTOMOBILES SUR DES BANCS D'ESSAI FIXES

(84) Benannte Vertragsstaaten:
**AT BE CH CY DE DK ES FI FR GB GR IE IT LI LU MC NL PT SE**

(30) Priorität: **09.10.1998 DE 19846612**

(43) Veröffentlichungstag der Anmeldung:
**01.08.2001 Patentblatt 2001/31**

(73) Patentinhaber: **Schenck Pegasus GmbH
64293 Darmstadt (DE)**

(72) Erfinder: **FREITAG, Gernot
D-64295 Darmstadt (DE)**

(74) Vertreter: **Behrens, Helmut, Dipl.-Ing.
Gross-Gerauer Weg 55
64295 Darmstadt (DE)**

(56) Entgegenhaltungen:
**EP-A- 0 696 729**

**Beschreibung**

Die Erfindung betrifft ein Verfahren zur Massensimulation von Kraftfahrzeugen auf ortsfesten Prüfständen gemäß dem Oberbegriff des Patentanspruchs 1 sowie eine Vorrichtung zur Durchführung dieses Verfahrens gemäß dem Oberbegriff des Patentanspruchs 5.

Zur stationären Fahrzeugprüfung werden als ortsfeste Prüfstände vornehmlich Rollenprüfstände verwendet. Dabei sind die Antriebsräder eines Fahrzeugs mit den Rollen des Prüfstandes drehmomentmäßig gekoppelt. Da sich die Fahrzeuge auf diesen Prüfständen nicht bewegen, müssen die aus der Beschleunigung der Fahrzeugmasse resultierenden Trägheitskräfte durch den Prüfstand simuliert werden, wenn das Massenträgheitsmoment des Prüfstandes nicht mit dem der Fahrzeugmasse übereinstimmt. Hierbei ist es üblich, die Differenz der Trägheitskräfte durch ein Belastungsmoment zu simulieren, das beispielsweise mit Hilfe einer Gleichstrommaschine erzeugt wird. Die Größe des Belastungsmoments wird durch einen dynamischen Regelkreis in Abhängigkeit der jeweiligen Beschleunigung geregelt (siehe beispielsweise EP-A-0 696 729).

Um beispielsweise das auf solchen Prüfständen ermittelte Abgasverhalten eines Fahrzeugs genau ermitteln zu können, werden von der Automobilindustrie und den Umweltbehörden hohe Anforderungen an die Meßgenauigkeit derartiger Rollenprüfstände gestellt. Deshalb müssen alle die Massen des Fahrzeugs berücksichtigt werden, die bei der Fahrt auf dem Prüfstand im Gegensatz zur Straßenfahrt nicht beschleunigt werden. Dies sind zum einen die translatorischen Massen des Fahrzeugs, wie das Gewicht, sowie die rotationsfähigen Teile der nicht angetriebenen Achsen auf dem Prüfstand.

In der Praxis wurden bisher diese rotationsfähigen stillstehenden Massen nicht exakt ermittelt, sondern aufgrund von Erfahrungswerten näherungsweise abgeschätzt. Dies erfolgte deshalb, da zwar das Gewicht eines Fahrzeugs einfach zu ermitteln ist, jedoch nicht die Trägheitsmomente der rotierenden Teile wie die Räder inklusive des Antriebsstrangs, der Kupplung, des Getriebes usw. Eine derartige Massenbestimmung dieser Teile wurde bisher erschwert, da bei diesen rotationsfähigen Fahrzeugteilen immer auch Reibungsverluste auftreten. Aus diesem Grunde wurden die gesuchten Trägheiten aus dem Gewicht des Fahrzeugs schätzungsweise ermittelt. So wurden aus dem Fahrzeuggewicht für die rotationsfähigen Fahrzeugteile ein Aufschlag auf die Fahrzeugmasse von 3 % vorgenommen. Das bedeutete beim Prüfstandlauf pro nichtmitrotierender Fahrzeugachse ein Zuschlag von 1,5 % auf die Fahrzeugmasse.

Eine derartige Schätzung von rotationsfähigen Fahrzeugmassen, die während des Prüfvorgangs auf dem Prüfstand nicht beschleunigt werden, kann in ungünstigen Fällen zu einem Fehler der Massensimulation führen, der für sich allein schon die geforderte Gesamt-Meßgenauigkeit überschreitet. Insbesondere führt es zu erheblichen Fehlern bei der Massensimulation, wenn die Verteilung der rotierenden Trägheiten auf den angetriebenen und nicht angetriebenen Achsen ungleichmäßig ist.

Der Erfindung liegt deshalb die Aufgabe zugrunde, die Genauigkeit der Massensimulation auf Fahrzeugprüfständen zu verbessern.

Diese Aufgabe wird durch die im Patentanspruch 1 und 5 angegebene Erfindung gelöst. Weiterbildungen und vorteilhafte Ausführungsbeispiele der Erfindung sind in den Unteransprüchen angegeben.

Die Erfindung hat den Vorteil, daß weitgehend alle rotationsfähigen Fahrzeugmassen durch eine Messung exakt bestimmt werden können und damit Folgefehler in der Berechnung der Fahrwiderstände als auch der Massensimulation vermeidbar sind.

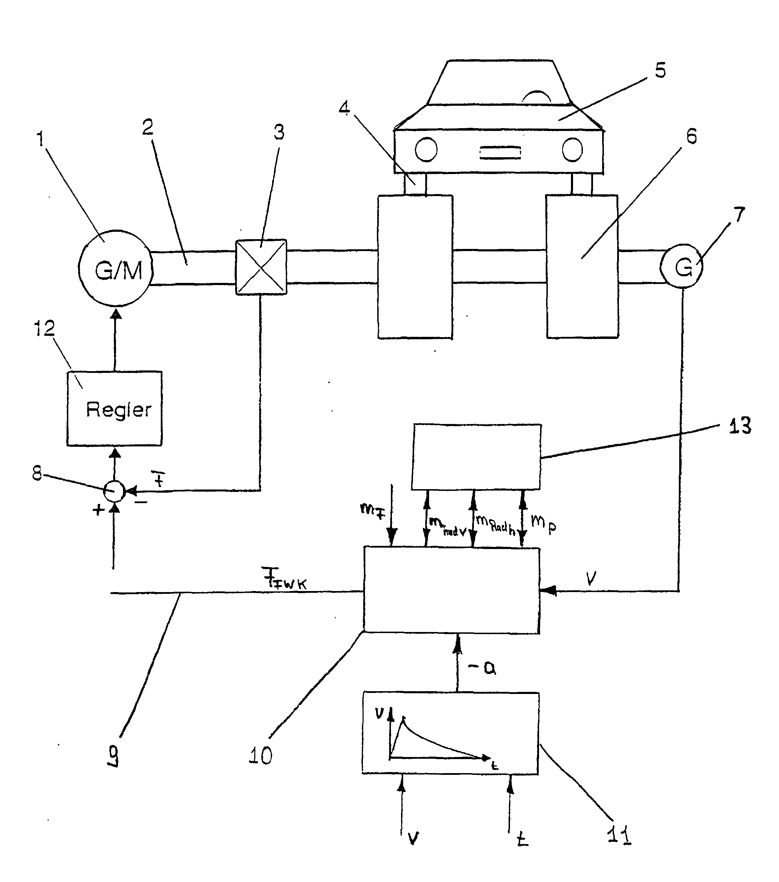

Die Erfindung wird anhand eines Ausführungsbeispiels, das in der Zeichnung dargestellt ist, näher erläutert. Die Zeichnung zeigt eine schematische Darstellung eines Rollenprüfstandes mit einem Regelkreis 9, der eine Auswertevorrichtung 10 mit Speicherschaltung 13 und eine Versuchseingabevorrichtung 11, einem Verknüpfungspunkt 8 und einen Regler 12 enthält, und der die Gleichstrommaschine 1 entsprechend der zu simulierenden Fahrzeugmasse regelt.

In der Zeichnung ist eine Gleichstrommaschine 1 dargestellt, die über eine Verbindungswelle 2 drehbar mit zwei Prüfstandsrollen 6 verbunden ist. Auf den beiden Prüfstandsrollen 6 ist ein Fahrzeug 5 schematisch dargestellt, das mit einer Achse und den beiden Fahrzeugrädern 4 kraftschlüssig mit dem Prüfstandsrollen 6 in Verbindung steht. Die Prüfstandsrollen 6 sind weiterhin über die gleiche Welle 2 mit einer Drehzahlerfassungseinrichtung verbunden, die als Tachogenerator 7 ausgebildet ist. Zwischen der Gleichstrommaschine 1 und den ihr gegenüberstehenden Prüfstandsrollen 6 ist an der Verbindungswelle 2 ein Drehmomentaufnehmer 3 angeordnet, der elektrisch mit dem Regelkreis 9 verbunden ist. Dabei besteht der Regelkreis 9 aus einer Auswertevorrichtung 10, an die eine Speicherschaltung 13 und eine Versuchseingabevorrichtung 11 angeschlossen sind, einen Regler 12 und ein Verknüpfungspunkt 8. Der Tachogenerator 7 ist mit der Auswertevorrichtung 10 eingangsseitig verbunden. Weiterhin ist der Verknüpfungspunkt 8 zwischen dem Regler 12, dem Kraftaufnehmer 3 und dem Ausgang der Auswertevorrichtung 10 angeordnet und stellt zwischen diesen eine elektrische Verbindung her. Der Regler 12 liefert seinerseits über seinen Ausgang ein Regelsignal an die Gleichstrommaschine 1. Die Gleichstrommaschine 1 kann sowohl als Generator als auch als Motor betrieben werden.

Die mit der Auswertevorrichtung 10 verbundene Versuchseingabevorrichtung 11 enthält zwei Eingänge zur Eingabe einer Fahrgeschwindigkeit v und der zugehörigen Zeit t und einen Ausgang, der die aus der Eingabe ermittelte Verzögerung -a der Auswertevorrichtung 10 zuführt. Die Auswertevorrichtung 10 enthält noch einen Eingang zur Eingabe der translatorischen Fahrzeugmasse $m_F$, die als vorbekannte Größe eingebbar ist. Weiterhin ist die Auswertevorrichtung 10 noch mit einer Speicherschaltung 13 verbunden, die die auf dem Prüfstand ermittelten Prüfergebnisse wie die Prüfstandsmasse $m_P$, die Masse der rotierbaren Fahrzeugantriebsmassen $m_{Rad\ h}$ an der Hinterachse und die Masse der übrigen rotierbaren Fahrzeugmasse $m_{Rad\ v}$ an der nicht angetriebenen Vorderachse speichert.

Die vorstehend beschriebene Einrichtung arbeitet nach folgenden Verfahrensschritten: Bei der Prüfung eines Fahrzeugs 5 auf einem Rollenprüfstand treibt die Antriebsachse des Fahrzeugs 5 als Prüfling über seine Fahrzeugräder 4 die Prüfstandsrollen 6 an. Andererseits können über die Gleichstrommaschine 1 auch die Prüfstandsrollen 6 angetrieben werden. Dies erfolgt vorzugsweise dann, wenn sich die nicht angetriebenen Räder 4 einer Fahrzeugachse auf den Prüfstandsrollen 6 befinden. Dadurch wird gleichzeitig der Tachogenerator 7 und die Gleichstrommaschine 1 über die Verbindungswelle 2 mitbewegt. Der Tachogenerator 7 erzeugt dabei ein Signal, daß der Geschwindigkeit v bzw. der Winkelgeschwindigkeit ω proportional ist. Bei dem vorstehend beschriebenen bekannten differenzierenden Auswerteverfahren, kann aus dem Winkelgeschwindigkeitssignal ω die beschleunigende Fahrzeugkraft abgeleitet werden, die auf die Prüfstandsrollen 6 wirkt. Andererseits kann im Motorbetrieb der Gleichstrommaschine 1 durch die Differentation des Geschwindigkeitssignals v bzw. ω auch die zur Beschleunigung der rotierbaren Fahrzeugmassen aufgewendete Kraftwirkung ermittelt werden. Daraus sind dann durch die Auswertevorrichtung 10 die entsprechenden Massewerte wie die Prüfstandsmasse $m_P$, die mit der Antriebsachse rotierende Masse $m_{Rad\ h}$, die mit der nicht angetriebenen Vorderachse rotierbare Masse $m_{Rad\ v}$ berechenbar.

Zur Simulation aller auf der Straße wirkenden Fahrzeugmassen müssen zunächst diese Einzelmassen erfaßt bzw. errechnet werden, um dann deren Wirkung mittels eines Ausrollversuchs auf der Straße zu ermitteln. Aus diesen Messergebnissen ist dann eine Fahrwiderstandskennlinie bzw. entsprechende Werte festlegbar, die zur Simulation der ermittelten Fahrzeugmassen dienen.

Der Erfindung lag die Erkenntnis zugrunde, daß die Genauigkeit der Massensimulation erheblich verbessert werden kann, wenn die Fahrzeuggesamtmasse $m_{gesamt}$ meßbar ermittelt wird, da diese Masse $m_{gesamt}$ letztendlich bei der Straßenfahrt wirkt und deren genaue Kenntnis zur Auswertung der Ausrollversuche und Bestimmung der Fahrwiderstandskennlinie notwendig ist. Die auf der Straße wirksame Gesamtmasse $m_{gesamt}$ des Fahrzeugs 5 berechnet sich damit zu:

$$m_{gesamt} = m_F + m_{Rad\ v} + m_{Rad\ h}$$

Dabei bedeutet:

$m_F$ = Fahrzeugmasse;
$m_{Rad\ v}$ = die rotierbare Masse der Vorderachse;
$m_{Rad\ h}$ = die rotierbare Masse der Hinterachse.

Die zur Ermittlung der vom Prüfstand zur Simulation anzunehmende Fahrzeugmasse $m_{F\ sim}$ ergibt sich, indem von der Gesamtmasse $m_{gesamt}$ die auf dem Rollenprüfstand bereits mitrotierenden Antriebsteile (z.B. Heckantrieb $m_{Rad\ h}$) subtrahiert werden. Daraus folgt der mathematische Zusammenhang:

$$m_{Fsim} = m_{gesamt} - m_{Rad\ h} = m_F + m_{Rad\ v}.$$

Da die translatorische Fahrzeugmasse $m_F$ als Gewicht meist bekannt ist, müssen meßtechnisch auf dem Prüfstand die rotierbaren Fahrzeugmassen, der nichtbeschleunigten Fahrzeugteile ermittelt werden. Dazu wird zunächst die Prüfstandsmasse $m_P$ ohne Fahrzeug mit Hilfe der Aufnahme der Verlustkennlinie bestimmt und in der Speicherschaltung 13 abgelegt. Nachfolgend wird das Prüffahrzeug 5 zunächst mit der einen Fahrzeugachse, beispielsweise der nichtangetriebenen Vorderachse, auf die Prüfstandsrollen 6 gebracht und im Prüfbetrieb die Verlustaufnahme und Massebestimmung vorgenommen. Aus diesem Wert wird zunächst die Differenz zu der vorab ermittelten Prüfstandsmasse $m_p$ gebildet, so daß sich zur vorangegangenen Verlustaufnahme der Prüfstandsrollen 6 ohne Fahrzeug die gesuchte Masse $m_{Rad\ v}$ und die Verluste $F_{V\ Rad\ v}$ ergeben. Diese Werte werden in die Speicherschaltung 13 übertragen und stehen dort für weitere Abfragen zur Verfügung.

Daraufhin wird das Fahrzeug 5 mit seinen Antriebsrädern 4 der Hinterachse auf die Prüfstandsrollen 6 gestellt und einem erneuten Prüfvorgang mit Verlustaufnahme und Massebestimmung unterzogen. Dabei wird in der Auswertevorrichtung 10 wiederum die Differenz zur vorausgegangenen Verlustaufnahme der Prüfstandsrollen 6 ohne Fahrzeug 5 gebildet, so daß sich die gesuchte Masse $m_{Rad\ h}$ und die Verluste $F_{V\ Rad\ h}$ ergeben. Diese Werte werden wiederum in die Speicherschaltung 13 geladen und stehen dort für weitere Berechnungen zur Verfügung.

Aus den vorangegangenen Prüfvorgängen liegen der Auswertevorrichtung 10 sämtliche Messwerte vor, die zur Berechnung der Gesamtmasse $m_{gesamt}$ erforderlich sind, so daß diese berechnet und in der Speicherschaltung 13 abgelegt wird.

Aus den vorliegenden Messwerten ist gleichfalls auch die zu simulierende Fahrzeugmasse $m_{F\ sim}$ nach der Formel:

$$m_{F\ sim} = m_{gesamt} - m_{Rad\ h} = m_F + m_{Rad\ v}$$

berechenbar.

Um einen geschwindigkeitsabhängigen Fahrzyklus simulieren zu können, ist noch die Aufnahme einer Fahrwiderstandskennlinie FWK erforderlich, die mit Hilfe von Ausrollversuchen auf der Straße ermittelt wird. Ein derartiger Ausrollversuch kann auch vor der Fahrzeugprüfung auf dem Prüfstand erfolgen, was in der Praxis die Regel ist.

Bei einem derartigen Ausrollversuch wird das Prüffahrzeug 5 auf eine vorgegebene Geschwindigkeit v auf der Straße beschleunigt und für deren Ausrollstrecke ohne Antrieb die Geschwindigkeitsänderungen ($\Delta v$) pro Zeiteinheit ($\Delta t$) erfaßt. Dabei werden die Geschwindigkeitswerte v in bestimmten Zeitabständen t abgetastet und der Versuchseingabevorrichtung 11 zugeführt. Diese errechnet daraus das Abrollverhalten -a über einen vorgegebenen Geschwindigkeitsbereich, der dem realen Fahrwiderstandsverlauf auf der Straße entspricht. Das ermittelte Abrollverhalten -a des Fahrezugs 5 wird der Auswertevorrichtung 10 zugeführt. Nach dem mathematischen Zusammenhang

$$F_{FWK} = -m_{gesamt} \cdot \frac{\Delta v}{\Delta t}$$

werden aus den vorhandenen Messergebnissen die nachzubildenen Kräfte $F_{FWK}$ über der Geschwindigkeit durch die Auswertevorrichtung 10 berechnet, die zur Steuerung einer vorgegebenen Fahrstreckensimulation als Sollwert dem Regelkreis 9 vorgegeben werden. Daraus wird mit Hilfe des durch den Kraftaufnehmer 3 erfaßten Ist-Wertes $F_{ist}$ die Differenzkraft ermittelt, die der Regler 12 zur Massensimulation ausregelt.

Mit der Erfindung ist es auch möglich, vorhandene Fahrwiderstandskennlinien, die mittels Ausrollversuchen und geschätzten Trägheiten für die übrigen rotationsfähigen Fahrzeugmassen ermittelt wurden, zu korrigieren. Dazu muß der Auswertevorrichtung 10 statt der Eingabewerte der Versuchseingabevorrichtung 11 lediglich Werte der fehlerbehafteten Fahrwiderstandskennlinie eingegeben werden und diese mit den Werten der messtechnisch ermittelten Gesamtmasse $m_{gesamt}$ nach der Formel

$$F_{FWK} = \frac{m_{gesamt}}{m_{geschätzt}} \cdot \frac{\Delta v}{\Delta t} \cdot m_{geschätzt} = \frac{m_{gesamt}}{m_{geschätzt}} \cdot F_{FWKgeschätzt}$$

ins Verhältnis gesetzt werden. Dadurch wird die fehlerbehaftete Widerstandskennlinie FWK entsprechend dem tatsächlichen Verhältnis mit Hilfe der Auswertevorrichtung 10 korrigiert.

Die vorbeschriebene Auswertevorrichtung 10, Speicherschaltung 13 und Versuchseingabevorrichtung 11 können auch in der elektrischen Prüfstandssteuerung integriert sein oder als programmgesteuerte Recheneinrichtung ausgebildet sein.

**Patentansprüche**

1. Verfahren zur Massensimulation von Fahrzeugmassen auf ortsfesten Prüfständen, insbesondere auf Fahrzeugrollenprüfständen, wobei die Simulationsmasse ($m_{Fsim}$) aus den auf dem Prüfstand mitrotierenden Fahrzeugmassen ($m_{Rad\ h}$) und den übrigen Fahrzeugmassen bestimmt wird, **dadurch gekennzeichnet, daß** für die übrigen rotationsfähigen Fahrzeugteile ein separater Prüfvorgang auf dem Prüfstand durchgeführt wird, aus dessen Meßwerten ($m_{Rad\ v}$) und mit Hilfe der translatorischen Fahrzeugmasse ($m_F$), sowie der während des Prüfvorgangs mitrotierenden Fahrzeugmassen ($m_{Rad\ h}$) die Fahrzeuggesamtmasse ($m_{gesamt}$) ermittelt wird, die zur Bestimmung der Simulationsmasse ($m_{Fsim}$) dient.

2. Verfahren zur Massensimulation nach Patentanspruch 1, **dadurch gekennzeichnet, daß** zunächst die Prüfstandsmasse ($m_p$) ohne Fahrzeug (5) bestimmt wird, sowie in einem separaten Prüfvorgang die rotierbaren Fahrzeugmassen ($m_{Rad\ v}$) der nicht angetriebenen Fahrzeugteile und in einem weiteren Prüfvorgang die Fahrzeugmassen ($m_{Rad\ h}$) der angetriebenen rotierbaren Fahrzeugteile gemessen werden, woraus mit Hilfe der vorgegebenen translatorischen Fahrzeugmasse (mF) die Fahrzeuggesamtmasse ($m_{gesamt}$) bestimmt wird.

3. Verfahren zur Massensimulation nach Anspruch 1 oder 2, **dadurch gekennzeichnet, daß** aus der ermittelten Fahrzeuggesamtmasse ($m_{gesamt}$) und dem bei einem Ausrollversuch des Kraftfahrzeugs (5) erfaßten Geschwindigkeitsänderungen ($\Delta v$) pro Zeiteinheit ($\Delta t$) eine Fahrwiderstandskennlinie (FWK) für das zu prüfende Fahrzeug (5) errechnet wird, mit deren Hilfe die Simulationsmasse ($m_{Fsim}$) bestimmt wird.

4. Verfahren zur Massensimulation nach einem der vorhergehenden Ansprüche, **dadurch gekennzeichnet, daß** bei einer Fahrwiderstandskennlinie (FWK), die mittels geschätzter Masse ($m_{geschätzt}$) der nichtbeschleunigten rotierbaren Fahrzeugteile ermittelt wurde, diese mit der gemessenen Masse ($m_{gesamt}$) der nichtbeschleunigten Fahrzeugteile ins Verhältnis gesetzt wird und daraus korrigierte Fahrwiderstandswerte ($F_{FWK}$) bzw. eine korrigierte Fahrwiderstandskennlinie (FWK) errechnet wird, die zur Bestimmung der Simulationsmasse ($m_{Fsim}$) dient.

5. Vorrichtung zur Durchführung des Verfahrens nach einem der vorhergehenden Ansprüche, bei welcher der Regelkreis (9) eines ortsfesten Prüfstandes eine Auswertevorrichtung (10) mit Speicherschaltung (13) enthält, die so ausgebildet sind, daß bei einem Prüfvorgang ohne Fahrzeugbelastung die Prüfstandsmasse ($m_P$) bzw. die Prüfstandsverluste ($F_{vP}$) mittels der Auswertevorrichtung (10) ermittelt und in der Speicherschaltung (13) gespeichert werden, **dadurch gekennzeichnet, daß** in einem weiteren Prüfvorgang die rotierbaren nichtangetriebenen Fahrzeugmassen ($m_{Rad\ v}$) und in einem weiteren separaten Prüfvorgang die angetriebenen rotierbaren Fahrzeugmassen ($m_{Rad\ h}$) mittels eines Meßvorgangs durch die Auswertevorrichtung (10) ermittelt und in der Speicherschaltung (13) abgespeichert werden und mit Hilfe der translatorischen Fahrzeugmasse ($m_F$) die Fahrzeuggesamtmasse ($m_{gesamt}$) errechnet wird, die zur Bestimmung der Simulationsmasse ($m_{Fsim}$) dient.

6. Vorrichtung nach Anspruch 5, **dadurch gekennzeichnet, daß** die Auswertevorrichtung (10) mit einer Versuchseingabevorrichtung (11) verbunden ist, in der bei sogenannten Ausrollversuchen eines Fahrzeugs(5) auf der Straße die Geschwindigkeitswerte ($\Delta v$) pro Zeit ($\Delta t$) eingegeben und daraus Werte für die Abbremsung (-a) des Fahrzeugs errechnet werden, woraus mit Hilfe der gemessenen Fahrzeugmassen ($m_{Rad\ v}$, $m_{Rad\ h}$) durch die Auswertevorrichtung (10) Fahrwiderstandskennwerte gebildet werden, die zur Bestimmung der Simulationsmasse ($m_{Fsim}$) dienen.

7. Vorrichtung nach Anspruch 5, **dadurch gekennzeichnet, daß** der Auswertevorrichtung (10) Werte einer Widerstandskennlinie (FWK) mit geschätzten Gesamtmassewerten ($m_{geschätzt}$) eingegeben werden, die in der Auswertevorrichtung (10) mit gemessenen Fahrzeuggesamtmassewerten ($m_{gesamt}$) ins Verhältnis gesetzt werden, woraus die Auswertevorrichtung (10) Werte ($F_{FWK}$) bzw. eine korrigierte Fahrwiderstandskennlinie (FWK) bildet.

8. Vorrichtung nach einem der vorhergehenden Ansprüche, **dadurch gekennzeichnet, daß** die Auswertevorrichtung (10), die Speicherschaltung (13) und die Versuchseingabevorrichtung (11) als elektronische Schaltung ausgebildet sind.

9. Vorrichtung nach einem der vorhergehenden Ansprüche, **dadurch gekennzeichnet, daß** die Auswertevorrichtung (10), die Speicherschaltung (13) und/oder die Versuchseingabevorrichtung (11) als programmgesteuerte Rechnerschaltung ausgebildet sind.

## Claims

1. Method for the mass simulation of vehicle masses on stationary test stands, in particular on vehicle roller dynamometers, wherein the simulation mass ($m_{F\ sim}$) is determined from the vehicle masses ($m_{Rad\ h}$) co-rotating on the test stand and from the remaining vehicle masses, **characterized in that** for the remaining rotatable vehicle parts a separate test operation on the test stand is effected, from the measured values ($m_{Rad\ v}$) of which and with the aid of the translatory vehicle mass ($m_F$) as well as the vehicle masses ($m_{Rad\ h}$) co-rotating during the test operation the vehicle total mass ($m_{gesamt}$) is obtained, which is used to determine the simulation mass ($m_{Fsim}$).

2. Mass simulation method according to claim 1, **characterized in that** first the test stand mass ($m_p$) without vehicle (5) is determined, and in a separate test operation the rotatable vehicle masses ($m_{Rad\ v}$) of the non-driven vehicle parts and in a further test operation the vehicle masses ($m_{Rad\ h}$) of the driven rotatable vehicle parts are measured, on the basis of which with the aid of the predetermined translatory vehicle mass ($m_F$) the vehicle total mass ($m_{gesamt}$) is determined.

3. Mass simulation method according to claim 1 or 2, **characterized in** **that** from the determined vehicle total mass ($m_{gesamt}$) and the speed variations ($\Delta v$) per unit of time ($\Delta t$), which are acquired during a coasting test of the motor vehicle (5), a road resistance characteristic curve (FWK) for the vehicle (5) to be tested is calculated, with the aid of which the simulation mass ($m_{Fsim}$) is determined.

4. Mass simulation method according to one of the preceding claims, **characterized in that**, in the case of a road resistance characteristic curve (FWK) obtained by means of an estimated mass ($m_{geschätzt}$) of the non-accelerated rotatable vehicle parts, this is set in relationship with the measured mass ($m_{gesamt}$) of the non-accelerated vehicle parts and used as a basis to calculate corrected road resistance values ($F_{FWK}$) and/or a corrected road resistance characteristic curve (FWK), which is used to determine the simulation mass ($m_{Fsim}$).

5. Apparatus for effecting the method according to one of the preceding claims, in which the control loop (9) of a stationary test stand comprises an evaluation apparatus (10) with memory circuit (13), which is designed in such a way that during a test operation without vehicle load the test stand mass ($m_P$) and/or the test stand losses ($F_{vP}$) are determined by means of the evaluation apparatus (10) and stored in the memory circuit (13), **characterized in that** in a further test operation the rotatable non-driven vehicle masses ($m_{Rad\ v}$) and in a further separate test operation the driven rotatable vehicle masses ($m_{Rad\ h}$) are determined by means of a measuring operation by the evaluation apparatus (10) and stored in the memory circuit (13) and with the aid of the translatory vehicle mass ($m_F$) the vehicle total mass ($m_{gesamt}$) is calculated, which is used to determine the simulation mass ($m_{Fsim}$).

6. Apparatus according to claim 5, **characterized in** **that** the evaluation apparatus (10) is connected to a test input apparatus (11), in which during so-called coasting tests of a vehicle (5) on the road the speed values ($\Delta v$) per time ($\Delta t$) are entered and used as a basis for calculating values for the retardation ($-a$) of the vehicle, on the basis of which with the aid of the measured vehicle masses ($m_{Rad\ v}$, $m_{Rad\ h}$) the evaluation apparatus (10) generates road resistance characteristic values, which are used to determine the simulation mass ($m_{Fsim}$).

7. Apparatus according to claim 5, **characterized in** **that** values of a road resistance characteristic curve (FWK) with estimated total mass values ($m_{geschätzt}$) are entered in the evaluation apparatus (10) and are set in the evaluation apparatus (10) in relationship with measured vehicle total mass values ($m_{gesamt}$), on the basis of which the evaluation apparatus (10) generates values ($F_{FWK}$) and/or a corrected road resistance characteristic curve (FWK).

8. Apparatus according to one of the preceding claims, **characterized in** **that** the evaluation apparatus (10), the memory circuit (13) and the test input apparatus (11) are designed as an electronic circuit.

9. Apparatus according to one of the preceding claims, **characterized in** **that** the evaluation apparatus (10), the memory circuit (13) and/or the test input apparatus (11) are designed as a program-controlled computer circuit.

**Revendications**

1. Procédé pour simuler des masses de véhicule sur des bancs d'essai fixes, en particulier des bancs d'essai à rouleaux pour véhicule, la masse de simulation ($m_{Fsim}$) étant déterminée à partir des masses du véhicule ($m_{Rad\ h}$) tournant en même temps sur le banc d'essai et les autres masses du véhicule, **caractérisé en ce que** pour les autres parties du véhicule susceptibles de tourner, il est procédé à un essai séparé sur le banc d'essai, la masse totale du véhicule ($m_{gesamt}$), qui sert à déterminer la masse de simulation ($m_{Fsim}$), étant déterminée à partir des valeurs de mesure ($m_{Rad\ v}$) de l'essai et à l'aide de la masse de translation ($m_F$) du véhicule, ainsi qu'à l'aide des masses du véhicule ($m_{Rad\ h}$) tournant en même temps pendant l'essai.

2. Procédé de simulation de masses selon la revendication 1, **caractérisé en ce qu'**on détermine d'abord la masse du banc d'essai ($m_p$) sans véhicule (5), et dans un essai séparé on mesure les masses tournantes du véhicule ($m_{Rad\ v}$) des parties non entraînées du véhicule et au cours d'un autre essai, on mesure les masses du véhicule ($m_{Rad\ h}$) des parties tournantes entraînées du véhicule, et à partir de celles-ci, on détermine, à l'aide de la masse de translation ($mF$) prédéterminée du véhicule, la masse totale du véhicule ($m_{gesamt}$).

3. Procédé de simulation de masses selon la revendication 1 ou 2, **caractérisé en ce qu'**à partir de la masse totale

($m_{gesamt}$) déterminée du véhicule et des variations de la vitesse ($\Delta v$) par unité de temps ($\Delta t$), détectées pendant un essai de roulement du véhicule automobile (5), on calcule une courbe caractéristique de résistance à la marche (FWK) pour le véhicule (5) à tester, à l'aide de laquelle on détermine la masse de simulation ($m_{Fsim}$).

4. Procédé de simulation de masses selon l'une des revendications précédentes, **caractérisé en ce que** dans le cas d'une courbe caractéristique de résistance à la marche (FWK), qui a été déterminée au moyen d'une masse estimée ($m_{geschätzt}$) des parties tournantes non accélérées du véhicule, celle-ci est mise en rapport avec la masse mesurée ($m_{gesamt}$) des parties non accélérées du véhicule, et à partir de ceci on calcule des valeurs de résistance à la marche corrigées ($F_{FWK}$) ou une courbe caractéristique de résistance à la marche corrigée (FWK) qui sert à déterminer la masse de simulation ($m_{Fsim}$).

5. Dispositif pour la mise en oeuvre du procédé selon l'une des revendications précédentes, dans lequel le circuit de régulation (9) d'un banc d'essai fixe contient un dispositif d'exploitation (10) avec circuit à mémoire (13), qui sont conçus de manière que lors d'un essai sans charge sur le véhicule, la masse du banc d'essai ($m_p$) ou les pertes de banc d'essai ($F_{vp}$) sont déterminées au moyen du dispositif d'exploitation (10) et mises en mémoire dans le circuit à mémoire (13), **caractérisé en ce qu'**au cours d'un autre essai, les masses tournantes non entraînées ($m_{Rad\ v}$) du véhicule et dans un autre essai séparé, les masses tournantes entraînées ($m_{Rad\ h}$) du véhicule sont déterminées par le dispositif d'exploitation (10) au moyen d'une opération de mesure, et sont mémorisées dans le circuit à mémoire (13), et à l'aide de la masse de translation ($m_F$) du véhicule, on calcule la masse totale ($m_{gesamt}$) du véhicule qui sert à déterminer la masse de simulation ($m_{Fsim}$).

6. Dispositif selon la revendication 5, **caractérisé en ce que** le dispositif d'exploitation (10) est relié à un dispositif de saisie de données d'essais (11) dans lequel on saisit, pour les essais dits de roulement d'un véhicule (5) sur route, les valeurs de la vitesse ($\Delta v$) par unité de temps ($\Delta t$), et à partir de là on calcule des valeurs du freinage (-a) du véhicule, à partir desquelles on forme, à l'aide des masses mesurées ($m_{Rad\ v}$, $m_{Rad\ h}$) du véhicule, au moyen du dispositif d'exploitation (10), les valeurs caractéristiques de la résistance à la marche qui servent à déterminer la masse de simulation ($m_{Fsim}$).

7. Dispositif selon la revendication 5, **caractérisé en ce qu'**on introduit dans le dispositif d'exploitation (10) des valeurs d'une courbe caractéristique de la résistance (FWK) avec des valeurs estimées de la masse totale ($m_{geschätzt}$) qui sont mises en rapport, dans le dispositif d'exploitation (10), avec des valeurs mesurées de la masse totale ($m_{gesamt}$) du véhicule, et à partir de celles-ci, le dispositif d'exploitation (10) forme des valeurs ($F_{FWK}$) ou une courbe caractéristique corrigée de la résistance à la marche (FWK).

8. Dispositif selon l'une des revendications précédentes, **caractérisé en ce que** le dispositif d'exploitation (10), le circuit à mémoire (13) et le dispositif de saisie de données d'essais (11) sont réalisés sous la forme d'un circuit électronique.

9. Dispositif selon l'une des revendications précédentes, **caractérisé en ce que** le dispositif d'exploitation (10), le circuit à mémoire (13) et/ou le dispositif de saisie de données d'essais (11) sont réalisés sous la forme d'un circuit d'ordinateur programmé.